# EUROPEAN PATENT SPECIFICATION

(11) **EP 0 901 616 B1**
(45) Date of publication and mention of the grant of the patent: **19.09.2001**
(21) Application number: 97924380.5
(22) Date of filing: 29.05.1997
(51) Int. Cl.: G01L 5/04, B60B 31/02

(54) **APPARATUS AND METHOD FOR MEASURING THE TENSION OF SPOKES MOUNTED IN A WHEEL AND APPARATUS AND METHOD FOR STRAIGHTENING SPOKED WHEELS**
VERFAHREN UND VORRICHTUNG ZUR MESSUNG DER SPANNUNG VON SPEICHEN EINES RADES SOWIE VERFAHREN UND VORRICHTUNG ZUM RICHTEN VON SPEICHENRÄDERN
PROCEDE ET APPAREIL DE MESURE DE LA TENSION DES RAYONS MONTES DANS UNE ROUE, ET APPAREIL ET PROCEDE DE REDRESSEMENT DES ROUES A RAYONS

(30) Priority: 30.05.1996 NL 1003231
(43) Date of publication of application: 17.03.1999
(73) Proprietor: HOLLAND MECHANICS B.V., 1442 PZ Purmerend (NL)
(72) Inventor: VAN DIJK, Peter, NL-1689 TH Zwaag (NL); ADMIRAAL, Antonius, Simon, NL-1906 CT Limmen (NL)
(74) Representative: Van Breda, Jacobus
(86) International application number: NL9700303
(87) International publication number: WO9745712

(56) References cited:
- EP-A- 0 476 749
- US-A- 5 103 414
- PATENT ABSTRACTS OF JAPAN vol. 95, no. 005 & JP 07 120333 A (SONY CORP), 12 May 1995,

## Description

The invention relates to an apparatus according to the preamble of claim 1.

Such an apparatus is known from US 5103414, whereby the vibrations of the spokes are measured at the holder in which the wheel is secured.

The disadvantage of the known apparatus is that the rim, the hub and the holder greatly influence the detected vibration, making the measurement inaccurate.

The object of the invention is to improve the accuracy of the measurement of the tension in the spokes and to this end the sensor means comprise a sensor placed next to the path of the spokes. This achieves that the vibration of a spoke is always directly measured, which increases accuracy.

According to a further improvement of the invention the sensor is an inductive electromechanical element that is able to convert a vibration of a magnetizable material into an electric current.

Such a sensor is simple and little sensitive to interference, being unaffected by noise and variations of the ambient temperature.

According to a further improvement of the invention the sensor means are suitable for the detection of low-frequency vibrations, for instance between 1 Hz and 2,000 Hz. This limited range, which coincides with the natural frequency of the spokes' vibration, permits uncomplicated sensor means.

According to a further improvement of the invention the sensor means are exclusively capable of detecting vibrations in the direct vicinity of the sensor. Consequently, only vibrations are detected from spokes moving very close to the sensor and spokes at, for instance, the other side of the wheel, do not influence the measurement. Surrounding influences are also not detected.

According to another preferred embodiment of the invention the sensor means are connected with a computer via an analog-to-digital converter. By converting the measured vibration data into digital values, the data can easily be analyzed.

According to a further improvement the computer is provided with a memory in which the digital measuring data may be stored for further analysis. This allows quick processing of the measuring data obtained from the spokes.

According to a preferred embodiment of the invention the vibration measurement of a spoke can be carried out without contact, such that preferably within 40 msec enough data are available. In this way a few seconds suffice to measure the tension state of all spokes in a wheel.

The computer is preferably also equipped with means for recording the dimensions of the spokes and/or the wheel.

According to a further preferred embodiment of the invention, detection means are provided for the identification of the detected spokes. The advantage being, that always the tension of a particular spoke can be recorded by the memory, which could be important for subsequent processing.

These detection means comprise preferably a sensor for recognizing a position on the rim. It is then possible, for instance, that the valve hole is recognized, so that the spokes can be identified in relation to said valve hole.

The invention also relates to a method according to the preamble of claim 12. This method is known from US-A-5.103.414 and has the earlier mentioned disadvantages. In order to overcome these disadvantages according to the invention, the vibrations are detected by a sensor placed along the path of the moving spokes. In this way, the vibrations are detected more accurately.

According to a further improvement of the method, the detected vibrations are converted into spoke tensions on the basis of the spoke and/or wheel dimensions stored in the computer. The conversion of the vibrations into spoke tensions allows their subsequent use in the presentation concerning the quality of the wheel and, for instance, for final work on the wheel such as straightening.

According to a further improvement the vibrations of the spokes are analyzed and split into one or more harmonic vibrations approximately in the range from 0 to 500 Hertz. By analysing the signal and by recording the first harmonics thereof, the spoke tension can be calculated.

According to the invention the measured vibrations are also a means for determining which spokes are loose. This makes it possible, even in situations where there is hardly any vibration in a spoke due to its being loose, that this is indicated so that measures may be taken.

The invention also comprises an apparatus for straightening spoked wheels, comprising sensors for the determination of the lateral deviation and vertical deviation of a rim in relation to the hub, straightening means for tightening or loosening nipples on the spokes and control means for the control of the straightening means, using the above-mentioned apparatus according to the invention.

From EP-A-0 476 749 an apparatus for straightening laced wheels is known. From this apparatus it is also known to use spoke tension measurement for improving the performance of the straightening device. However, the known measuring means 19 has mechanical contact with each spoke in order to measure the tension. This takes so much time that the straightening time of the wheel is too long.

By using the apparatus according to the invention, the required measuring time is so short that it is possible to include the spoke tension measuring in the straightening method. In this way, the wheels have a more clearly defined spoke tension and are straightened in a short time.

The invention also comprises a method of straightening the spoked wheels in which the lateral deviation and the vertical deviation of a rim in relation to a hub are measured and the nipples on the spokes can be tightened or loosened with the aid of straightening means under influence of the control means, wherein the control means use the apparatus or the method according to the invention for determining the spoke tension. By using the accurate spoke tension measurements, straightening can proceed more quickly and more accurately.

According to a further improvement of the invention the spokes having a tension above an adjustable value are loosened first of all and/or the loose spokes are tightened to a minimum spoke tension, after which all spoke tensions are measured anew and straightening commences. In this manner an even spoke tension in the straightened wheel is obtained in a short time.

According to a further improvement the correction to be made by means of the straightening means is calculated, based on the measured lateral deviation, vertical deviation and spoke tension, whereby the corrections are limited so that the spoke tension remains between the adjustable value ad the minimum value. By immediately incorporating the measured data in a calculation, there will be fewer corrections ensuing from subsequent measurements, which affords an extra time gain.

The invention will now be elucidated by means of a drawing with reference to a few embodiments.
In the drawing
Fig. 1 shows a schematic cross-section of an apparatus for measuring the spoke tension and for straightening a wheel;
Fig. 2 shows a partial side view of the apparatus according to Fig. 1;
Fig. 3 shows a front view of a sensor for measuring the vibrations in a spoke;
Fig. 4 shows a side view of the sensor according to Fig. 3; and
Fig. 5 shows a graph illustrating the strength of a measuring signal of the sensor subject to the distance between sensor and spoke.

In the Figure identical parts are indicated by identical reference numbers whenever possible.

Through of a group of spokes 4, a rim 1 is fastened to a side of a hub 2 and through a second group of spokes 5 to another side of the hub 2. The axle of the hub 2 is fastened in a holder 3. On rotation of the wheel in a direction A, the first spokes 4 and the second spokes 5 each move in a conical plane past the sensors 7. While rotating, the spokes are tapped by a plectrum 6 causing the spokes which are under sufficient tension, i.e. the spoke tension, to vibrate. This vibration is detected by the sensor 7.

The sensor 7 may, for instance, be a sensor element capable of detecting the vibrating movements of a magnetizable element such as a steel spoke, at frequencies ranging from 1 Hz to 2000 Hz. Such elements are known and are used to detect the vibrations of the strings, for instance, of a bass guitar.

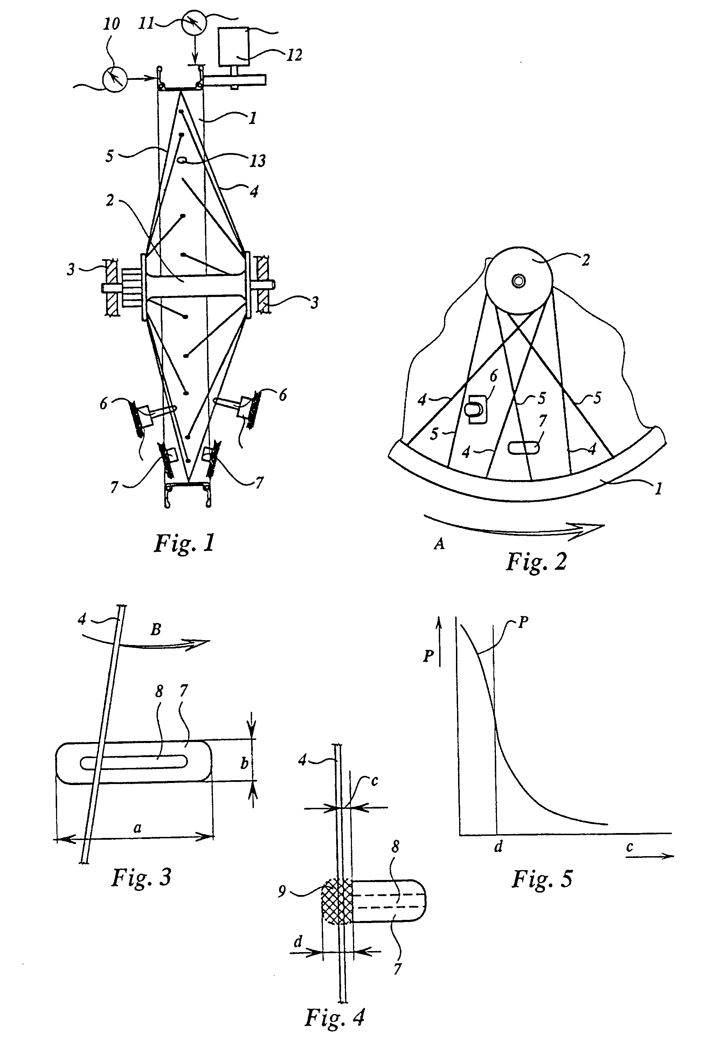

The sensor 7 consists of a sensor core 8 surrounded by a coil. In the coil a tension is created which corresponds with the vibrating movement caused by the vibration produced by the spoke 4 moving in a direction B past the sensor core 8. Such sensors may, for instance, have a length of 40 mm and a width b of 10 mm. For the sensor an operational area 9 may be indicated. The distance between the spoke 4 and the sensor 7 is c, while the graph of Figure 5 shows how the signal intensity P, indicated on the vertical axis, decreases as the distance c increases. As soon as c becomes greater than a distance d, d being for instance 5 mm, the signal has become insignificantly low which means that, for instance, the vibrations of the second spokes 5 do not influence the signal that the first spokes 4 induce in the sensor 7 near the path of the first spokes 4.

The spoke tension is measured as follows: the wheel is made to rotate either by hand or by means of a motor. The spokes are made to vibrate with the aid of the plectrum 6 and the vibrating movement of the spokes is measured by means of the sensors 7. The analogous signals recorded by the sensors are converted into digital values with the aid of an analog-to-digital converter, which converter can use a sample-frequency from 1 to 4 kHz. These digital values are stored in a memory of a computer (not shown), or, for instance on its hard disk. This digital value is then analyzed per spoke, for instance, by a Fourier transformation, and one or more first harmonics are determined in the 0-500 Hz frequency range.

Using the computer data about the dimensions of the spoke and/or the wheel, the tensions in the spoke are calculated. If a wheel comprises spokes that are in contact, then two harmonics are measured in a spoke, which corresponds with the partial restraint of the spoke where it is in contact with the other spoke.

After a spoke tension has been calculated, it is stored as pertaining to one particular spoke. To that end the position of the spoke in relation to the rim of the wheel is determined, for instance in relation to a valve hole 13 or another detectable characteristic. For the detection of the valve hole 13 a sensor (not shown) may be used.

The measurement of the spoke tension may be carried out in a special measuring bench, the wheel being introduced and rotated by hand, first measuring one side of the wheel and after turning the wheel by hand, measuring the other side of the wheel. The measuring results may be visualized on a screen of the computer, if desired a measuring report is printed out, or the results may be stored in a data file for future analysis.

Tension measurement may also be carried out in an apparatus in which the wheel is straightened which means that after the lateral deviation is measured by means of a lateral deviation sensor 10 and the vertical deviation by means of a vertical deviation sensor 11, said lateral and vertical deviations are reduced to acceptable values by means of straightening means (not shown). The straightening means consist of rotation means for turning the nipples screwed onto the spokes, the amount of turning being controlled on the basis of the sensor measurements. When straightening, use is also made of the information obtained from the spoke tension measurement.

One of the first steps during straightening may be the detection, by means of the spoke tension measurement, of loose spokes which will then be tightened to a minimum tension. Tensions may also be found to be too high and are first reduced to acceptable values before continuing the straightening process.

The method hereby is that the wheel is clamped in the holder 3 and by means of a drive 12, is rotated, for instance, in about 1-2 seconds around its axle. The spokes are made to vibrate by means of the plectrum 6 and the vibrations are measured by the sensor 7. The spoke tensions for each spoke are calculated in a computer (not shown). Thus these are known after about 2 seconds.

Subsequently spokes that are too loose are tightened and spokes that are too tight are loosened. Then the straightening process commences, whereby the lateral deviation and the vertical deviation are measured, and the spoke tensions are possibly measured anew.

Based on the values measured for lateral deviation, vertical deviation and spoke tension, the rotations of the nipples to be applied to the spokes are calculated and carried out. The wheel is now straightened, although it is also possible that one or more measurements need to be carried out anew.

The calculation also entails that the spoke tension must not be above a maximum value and not below a minimum value. Should it become apparent from the calculation that a particular minimum of lateral deviation or vertical deviation is not attainable, then the minimum and maximum values of the spoke tensions are adjusted. It is also conceivable that the range of minimum and maximum value in the spoke tension is laid down, so that possibly the maximum of allowable vertical deviation and/or lateral deviation may be increased.

During straightening on the basis of the calculations, the spokes to be straightened will first be loosened after which the spokes that are too tight will be dealt with, in order to avoid that even only temporarily the spoke tension becomes too high, which could cause permanent deformation.

## Claims

1. An apparatus for measuring the tension of spokes (4,5) mounted in a wheel, comprising a holder (3) for securing the wheel such that when it is rotated the spokes (4,5) are moving along a path, tapping means (6) for generating a vibration characteristically occurring in tensed spokes and sensor means for detecting the vibration of a spoke (4,5), **characterized in that** the sensor means comprise a sensor (7) placed next to the path of the spokes (4,5).

2. An apparatus in accordance with claim 1, **characterized in that** the sensor (7) is an inductive electromechanical element for converting a vibration of a magnetizable material into an electric current.

3. An apparatus in accordance with claim 1 or 2, **characterized in that** the sensor means are provided with means for detecting low-frequency vibrations, for instance between 1 Hz and 2,000 Hz.

4. An apparatus in accordance with any one of claims 1-3, **characterized in that** the sensor (7) is exclusively capable of detecting vibrations in the direct vicinity.

5. An apparatus in accordance with any one of claims 1-4, **characterized in that** the sensor (7) is connected with a computer via an analogue-to-digital converter.

6. An apparatus in accordance with claim 5, **characterized in that** the computer is provided with a memory for storing the digital measuring data for further analysis.

7. An apparatus in accordance with any one of the preceding claims, **characterized in that** the vibration measurement of a spoke can be carried out without contact.

8. An apparatus in accordance with claim 7, **characterized in that** the sensor means are such that within 40 msec sufficient data about a spoke are available.

9. An apparatus in accordance with any one of claims 6-8, **characterized in that** the dimensions of the spokes and/or the wheel can be stored in the computer.

10. An apparatus in accordance with claim 9, **characterized in that** detection means are provided for identifying the detected spokes.

11. An apparatus in accordance with claim 10, **characterized in that** the detection means comprise a sensor for recognizing a position on the rim.

12. A method of measuring the tension of spokes mounted in a wheel, wherein the wheel is placed in a holder and rotated so that the spokes are moving along a path, whereby the spokes are tapped thereby generating vibrations in the spokes, **characterized in that** the vibrations are detected by a sensor placed next to the path of the moving spokes.

13. A method in accordance with claim 12, **characterized in that** the detected vibrations are converted into spoke tensions on the basis of the spoke and/or wheel dimensions stored in the computer.

14. A method in accordance with claim 13, **characterized in that** the vibrations of the spokes are analyzed and split into one or more harmonic vibrations approximately in the range from 0 to 500 Hertz.

15. A method in accordance with any one of claims 11-14, **characterized in that** based on the measured vibrations it is determined which spokes are loose.

16. An apparatus for straightening spoked wheels, comprising sensors for the determination of the lateral deviation and vertical deviation of a rim in relation to the hub, straightening means for tightening or loosening nipples on the spokes and control means for the control of the straightening means and an apparatus in accordance with any one of claims 1-11.

17. A method for straightening spoked wheels in which the lateral deviation and the vertical deviation of a rim in relation to a hub are measured and the nipples on the spokes can be tightened or loosened with the aid of straightening means under influence of the control means, wherein the control means use the apparatus of any one of the claims 1-11 or the method according to any one of the claims 12-15 for determining the spoke tension.

18. A method in accordance with claim 17, whereby first the spokes having a tension above an adjustable value are loosened and/or the loose spokes are tightened to a minimum spoke tension, whereafter all spoke tensions are measured anew and straightening commences.

19. A method in accordance with claim 17 or 18, whereby the corrections to be made by means of the straightening means are calculated, based on the measured lateral deviation, vertical deviation and spoke tension, whereby the corrections are limited so that the spoke tension remains between the adjustable value and the minimum value.

## Patentansprüche

1. Vorrichtung zum Messen der Spannung von Speichen (4, 5), die in ein Rad montiert sind, welche eine Halterung (3) umfasst, um das Rad so zu befestigen, dass die Speichen (4, 5) sich entlang einer Bahn bewegen, wenn das Rad gedreht wird, eine Vorrichtung zum Anschlagen (6) zur Erzeugung einer Schwingung, welche charakteristischerweise in gespannten Speichen auftritt, sowie eine Sensorvorrichtung zur Erfassung der Schwingung einer Speiche (4, 5),
**dadurch gekennzeichnet,**
**dass** die Sensorvorrichtung einen Sensor (7) umfasst, welcher neben der Bahn der Speichen (4, 5) angeordnet ist.

2. Vorrichtung nach Anspruch 1,
**dadurch gekennzeichnet,**
**dass** der Sensor (7) ein induktives, elektromechanisches Element ist zur Umwandlung einer Schwingung eines magnetisierbaren Materials in einen elektrischen Strom.

3. Vorrichtung nach Anspruch 1 oder 2,
**dadurch gekennzeichnet,**
**dass** die Sensorvorrichtung mit einem Mittel zum Erfassen von Niederfrequenzschwingungen, beispielsweise zwischen 1 Hz und 2000 Hz, versehen ist.

4. Vorrichtung nach einem der Ansprüche 1 - 3,
**dadurch gekennzeichnet,**
**dass** der Sensor (7) Schwingungen ausschließlich in der unmittelbaren Umgebung erfassen kann.

5. Vorrichtung nach einem der Ansprüche 1-4,
**dadurch gekennzeichnet,**
**dass** der Sensor (7) über einen Analog-Digital-Umsetzer mit einem Computer verbunden ist.

6. Vorrichtung nach Anspruch 5,
**dadurch gekennzeichnet,**
**dass** der Computer einen Speicher aufweist zum Speichern der digitalen Messdaten zur weiteren Analyse.

7. Vorrichtung nach einem der vorhergehenden Ansprüche,
**dadurch gekennzeichnet,**
**dass** die Schwingungsmessung einer Speiche berührungslos durchgeführt werden kann.

8. Vorrichtung nach Anspruch 7,
**dadurch gekennzeichnet,**
**dass** die Sensorvorrichtung so geartet ist, dass innerhalb von 40 msec ausreichende Daten über eine Speiche vorhanden sind.

9. Vorrichtung nach einem der Ansprüche 6 - 8,
**dadurch gekennzeichnet,**
**dass** die Abmessungen der Speichen und/oder des Rads im Computer gespeichert werden können.

10. Vorrichtung nach Anspruch 9,
**dadurch gekennzeichnet,**
**dass** die Erfassungsvorrichtung so ausgestattet ist, dass die erfassten Speichen identifiziert werden können.

11. Vorrichtung nach Anspruch 10,
**dadurch gekennzeichnet,**
**dass** die Erfassungsvorrichtung einen Sensor zum Erkennen einer Position auf der Felge umfasst.

12. Verfahren zum Messen der Spannung von Speichen, die in ein Rad montiert sind, bei welchem das Rad in einer Halterung angebracht ist und gedreht wird, so dass sich die Speichen entlang einer Bahn bewegen, wobei die Speichen angeschlagen werden, wodurch Schwingungen in den Speichen erzeugt werden,
**dadurch gekennzeichnet,**
**dass** die Schwingungen von einem Sensor erfasst werden, welcher neben der Bahn der sich bewegenden Speichen angeordnet ist.

13. Verfahren nach Anspruch 12,
**dadurch gekennzeichnet,**
**dass** die erfassten Schwingungen aufgrund der im Computer gespeicherten Speichen- und/oder Radabmessungen in Speichenspannungen umgewandelt werden.

14. Verfahren nach Anspruch 13,
**dadurch gekennzeichnet,**
**dass** die Schwingungen der Speichen analysiert und in eine oder mehr harmonische Schwingungen ungefähr im Bereich von 0 bis 500 Hertz aufgeteilt werden.

15. Verfahren nach einem der Ansprüche 11 - 14,
**dadurch gekennzeichnet,**
**dass** aufgrund der gemessenen Schwingungen festgestellt wird, welche Speichen locker sind.

16. Vorrichtung zum Geraderichten von Speichenrädern, welche umfasst:
Sensoren zum Feststellen der lateralen Abweichung und der vertikalen Abweichung einer Felge im Verhältnis zur Nabe, ein Mittel zum Geraderichten zum Spannen oder Lockern von Nippeln an den Speichen und eine Steuervorrichtung zum Steuern des Mittels zum Geraderichten sowie eine Vorrichtung nach einem der Ansprüche 1 - 11.

17. Verfahren zum Geraderichten von Speichenrädern, bei welchem die laterale Abweichung und die vertikale Abweichung einer Felge im Verhältnis zur Nabe gemessen werden und die Nippel an den Speichen gespannt oder gelockert werden können mit Hilfe eines von der Steuervorrichtung beeinflussten Mittels zum Geraderichten, wobei die Steuervorrichtung die Vorrichtung nach einem der Ansprüche 1 - 11 oder das Verfahren nach einem der Ansprüche 12 - 15 verwendet, um die Speichenspannung festzustellen.

18. Verfahren nach Anspruch 17, wobei zuerst die Speichen, welche eine Spannung aufweisen, die über einem einstellbaren Wert liegt, gelockert werden und/oder die lockeren Speichen auf eine Minimal-Speichenspannung gespannt werden, wonach alle Speichenspannungen erneut gemessen werden und das Geraderichten beginnt.

19. Verfahren nach Anspruch 17 oder 18, wobei die Korrekturen, die durch das Mittel zum Geraderichten auszuführen sind, aufgrund der gemessenen lateralen Abweichung, vertikalen Abweichung und Speichenspannung berechnet werden,
wobei die Korrekturen so begrenzt sind, dass die Speichenspannung zwischen dem einstellbaren Wert und dem Minimalwert bleibt.

## Revendications

1. Appareil pour mesurer la tension de rayons (4, 5) montés dans une roue, comportant un support (3) destiné à fixer la roue afin que, lorsqu'elle est en rotation, les rayons (4, 5) se déplacent suivant une trajectoire, des moyens de frappe (6) destinés à générer une vibration apparaissant de façon caractéristique dans des rayons tendus et des moyens à capteur destinés à détecter la vibration d'un rayon (4, 5), **caractérisé en ce que** les moyens à capteur comprennent un capteur (7) placé au voisinage de la trajectoire des rayons (4, 5).

2. Appareil selon la revendication 1, **caractérisé en ce que** le capteur (7) est un élément électromécanique inductif destiné à convertir une vibration d'une matière aimantable en un courant électrique.

3. Appareil selon la revendication 1 ou 2, **caractérisé en ce que** les moyens à capteur sont pourvus de moyens destinés à détecter des vibrations à basse fréquence, par exemple entre 1 Hz et 2000 Hz.

4. Appareil selon l'une quelconque des revendications 1 à 3, **caractérisé en ce que** le capteur (7) est capable exclusivement de détecter des vibrations dans le voisinage direct.

5. Appareil selon l'une quelconque des revendications 1 à 4, **caractérisé en ce que** le capteur (7) est connecté à un ordinateur par l'intermédiaire d'un convertisseur analogique-numérique.

6. Appareil selon la revendication 5, **caractérisé en ce que** l'ordinateur est pourvu d'une mémoire destinée à stocker les données de mesure numériques pour une autre analyse.

7. Appareil selon l'une quelconque des revendications précédentes, **caractérisé en ce que** la mesure de vibration d'un rayon peut être exécutée sans contact.

8. Appareil selon la revendication 7, **caractérisé en ce que** les moyens à capteur sont tels qu'en moins de 40 ms suffisamment de données concernant un rayon sont disponibles.

9. Appareil selon l'une quelconque des revendications 6 à 8, **caractérisé en ce que** les dimensions des rayons et/ou de la roue peuvent être stockées dans l'ordinateur.

10. Appareil selon la revendication 9, **caractérisé en ce que** des moyens de détection sont prévus pour identifier les rayons détectés.

11. Appareil selon la revendication 10, **caractérisé en ce que** les moyens de détection comprennent un capteur destiné à reconnaître une position sur la jante.

12. Procédé de mesure de la tension de rayons montés dans une roue, dans lequel la roue est placée dans un support et est mise en rotation afin que les rayons se déplacent suivant une trajectoire, les rayons étant frappés de façon que des vibrations soient générées dans les rayons, **caractérisé en ce que** les vibrations sont détectées par un capteur placé au voisinage de la trajectoire des rayons en mouvement.

13. Procédé selon la revendication 12, **caractérisé en ce que** les vibrations détectées sont converties en tensions des rayons sur la base des dimensions des rayons et/ou de la roue stockées dans l'ordinateur.

14. Procédé selon la revendication 13, **caractérisé en ce que** les vibrations des rayons sont analysées et divisées en une ou plusieurs vibrations harmoniques approximativement comprises dans la plage de 0 à 500 Hz.

15. Procédé selon l'une quelconque des revendications 11 à 14, **caractérisé en ce que**, sur la base des vibrations mesurées, il est déterminé quels sont les rayons qui sont desserrés.

16. Appareil pour redresser des roues à rayons, comportant des capteurs pour la détermination de la déviation latérale et de la déviation verticale d'une jante par rapport au moyeu, des moyens de redressement destinés à serrer et desserrer des écrous sur les cayons et des moyens de commande destinés à commander les moyens de redressement et un appareil selon l'une quelconque des revendications 1 à 11.

17. Procédé pour redresser des roues à rayons dans lesquelles la déviation latérale et la déviation verticale d'une jante par rapport à un moyeu sont mesurées et les écrous situés sur les rayons peuvent être serrés ou desserrés à l'aide de moyens de redressement sous l'action des moyens de commande, dans lequel les moyens de commande utilisent l'appareil selon l'une quelconque des revendications 1 à 11 ou le procédé selon l'une quelconque des revendications 12 à 15 pour déterminer la tension des rayons.

18. Procédé selon la revendication 17, dans lequel, en premier, les rayons ayant une tension supérieure à une valeur réglable sont desserrés et/ou les rayons desserrés sont serrés à une tension minimale de rayon, après quoi toutes les tensions de tous les rayons sont de nouveau mesurées et le redressement commence.

19. Procédé selon la revendication 17 ou 18, dans lequel les corrections devant être réalisées à l'aide des moyens de redressement sont calculées, sur la base de la déviation latérale, de la déviation verticale et de la tension des rayons mesurées, grâce à quoi les corrections sont limitées afin que la tension des rayons reste entre la valeur réglable et la valeur minimale.
